# EUROPEAN PATENT SPECIFICATION

(11) **EP 1 229 664 B1**
(45) Date of publication and mention of the grant of the patent: **17.12.2008**
(21) Application number: 01102248.0
(22) Date of filing: 31.01.2001
(51) Int. Cl.: H04B 1/38

(54) **Mobile terminal for a wireless telecommunication system**
MOBILES ENDGERÄT FÜR EIN DRAHTLOSES TELEKOMMUNIKATIONSSYSTEM
TERMINAL MOBILE POUR UN SYSTEME DE TELECOMMUNICATION SANS FIL

(43) Date of publication of application: 07.08.2002
(73) Proprietor: Sony Deutschland GmbH, 10785 Berlin (DE)
(72) Inventor: Winkler, Gregor, Sony Inter. (Europe) GmbH, 85609 Aschheim (DE); Schünemann, Andreas, Sony Inter. (Europe) GmbH, 85609 Aschheim (DE)
(74) Representative: Körber, Martin Hans

(56) References cited:
- EP-A- 0 752 735
- WO-A-95/03549

## Description

The present invention relates to a mobile terminal for a wireless telecommunication system.

In mobile terminals (e.g. mobile phones) for a wireless telecommunication system (e.g. GSM or UMTS system), the specific absorption rate (SAR) value is of great interest. It indicates how much energy is absorbed in human tissue and especially in the human brain. Organizations like FCC (Federal Communications Commission) define how much energy is allowed to be absorbed in human tissue. If a terminal exceeds these values, it is impossible to sell the terminal in a region where the regulations are mandatory.

In the GSM system, for example, which is operated in a TDMA (time division multiplex access) mode, even for a one-slot transmission of signals it may be hard to achieve the required SAR values, in particular when the SAR values are fairly restrictive. One-slot transmission means that the terminal is using only one of the time-slots which are provided by the GSM system to transmit the signals to another terminal. The problem to keep the energy absorption of human tissue below the preset limits increases tremendously when a multi-slot transmission is envisioned where the number of time-slots used for signal transmission is greater than one. In a situation where the user is making a phone call and holds the terminal at his or her head, the energy radiated into the user's brain can be clearly too much then, and the allowable SAR values are not met. On the other hand, when the user holds the terminal away from his head energy radiation into the user's brain may be reduced to a tolerable level and even a multi-slot data transfer from the terminal to another communication device may be acceptable. Thus, the position of the terminal with respect to the user's body and particularly with respect to his head is crucial for whether increased energy radiation from the terminal can be accepted or not. A typical situation of increased energy radiation from the terminal can be, for example, a voice conversation combined with data transfer in the background which future mobile terminals are expected to be capable of. In this case, if the data transfer is a pure background process running "invisible" to the user, the user will not be aware of the increased energy radiation and will keep the terminal next to his head, thereby unconsciously taking a risk of potential health damage.

Examples of a terminals adapting the transmission according to the proximity of the body of the user are disclosed in EP 0 752 735 and EP 0 977 304.

It is therefore an object of the present invention to better protect a user of a mobile terminal against potential health damage in case of increased energy radiation from the terminal.

To achieve this object, the present invention provides a mobile terminal for a wireless telecommunication system, comprising antenna means built in the terminal, and an output stage for providing signals to the antenna means to be transmitted therefrom, characterized by measuring means for measuring impedance changes of the antenna means, and control means responsive to the measuring means for effecting a predetermined reaction when, as a first predetermined condition, the signal reflection as measured by the measuring means is below a predetermined threshold and at the same time a second predetermined condition indicative of an increased energy radiation from the antenna means is met, for the purpose of a reduction of the radiation of the antenna means.

The solution according to the present invention is based on the idea that by measuring the antenna impedance, e. g. by measuring the signal reflection the position of the terminal with respect to the body of the user and in particular with respect to the user's head can be detected. Usually, the antenna means will be designed so as to achieve optimum impedance matching in a particular dedicated position of the terminal which is normally a position next to the user's head. In this normal position of the terminal, only a minimum of the transmitted RF power is reflected at the antenna means and is travelling back toward the output stage. Removing the terminal from the head causes an impedance mismatch, and the amount of reflection increases. Thus, the amount of reflection indicates whether the terminal is placed next to the user's body (head) or not.

If, through measuring the reflected signals, it is determined that the terminal is removed from the head (i.e. the signal reflection exceeds the threshold), a situation of increased energy radiation from the terminal can be tolerated. If, however, it is determined that the terminal is held close to the user's head (i.e. the signal reflection is below the threshold), a suitable reaction is effected by the control means in case of increased energy radiation, to avoid any harm to the user's health. Whether the terminal is transmitting at an increased energy level or not is known to the control means from the terminal's operation mode.

Advantageously, the control means adjusts the number of used transmit timeslots depending on the human tissue proximity in case that the mobile terminal is operated in a time division multiple access (TDMA) mode. Alternatively, the control means advantageously adjusts the output power level depending on the human tissue proximity in case that the mobile terminal is operated in a code division multiple access (CDMA) or a frequency division multiple access (FDMA) mode. Further advantageously, the control means is constructed or adapted to operate in a TDMA mode and/or CDMA mode and/or FDMA mode, i. e. is either a one mode, dual mode or triple mode control means.

The predetermined reaction may comprise issuing a warning signal to the user of the terminal. The warning signal advantageously comprises an acoustic signal. The warning feature could e. g. automatically be disabled if an external antenna connection is detected. Also, the warning could be disabled by the user in a corresponding menu setting.

The second predetermined condition may require a background data transfer from the terminal to be performed concurrently to a phone conversation over the terminal. Then, the predetermined reaction may comprise disabling or reducing the rate of the background data transfer.

Furthermore, when the telecommunication system is operable in a time division multiplex access mode providing a plurality of time-slots for signal communication, the second predetermined condition may require the terminal to be operated in a multi-slot transmission mode. The predetermined reaction then may comprise an adjustment of the number of, e. g. reducing, used transmission timeslots.

Preferably, the threshold is determined dependant on a power level and/or a multislot class at which the output stage is operating.

A suited means may be connected between the output stage and the antenna means for providing information regarding the antenna impedance to the measuring means. The means for providing information regarding the antenna impedance to the measuring means can e. g. be a directional coupler, a bridge configuration or any other suited means.

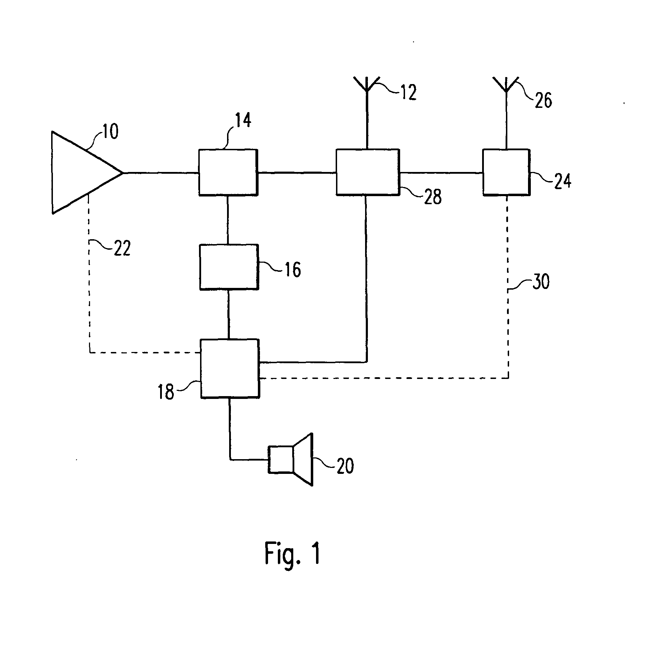

In the following, the present invention will be explained in more detail with reference to the accompanying single figure 1 in which a block diagram of a preferred embodiment of a mobile terminal according to the present invention is schematically shown. The terminal is a mobile phone for wireless use e.g. in a GSM or UMTS telecommunication system. In the block diagram, a power output amplifier 10 forming an output stage of the terminal outputs RF signals to be transmitted from the terminal. For transmitting these RF signals, the terminal comprises a built in antenna 12 which is part of the terminal. The antenna 12 may be a patch antenna, a meander antenna or a helix antenna, for example, and can extend from the housing or is built in the housing of the mobile terminal. The antenna 12 is designed to achieve optimum impedance matching and thus minimum signal reflection when the terminal is held at the user's head.

Once the user removes the terminal from his head, reflection of the RF signals supplied to the antenna 12 increases. To detect the reflected signals, a directional coupler 14 is provided between the amplifier 10 and the antenna 12. A measuring circuit 16 measures the reflected signals and provides a corresponding measurement result to an electronic control unit 18 which is preferably formed of a microprocessor. The measurement result is indicative of the amount of signal reflection at the antenna 12. To this end, the measuring circuit 16 can measure the reflected power or the amplitude of the reflected signals, for example. The control unit 18, optionally after analog-to-digital conversion of the received measurement result, compares the measurement result with a predetermined threshold which is stored in the control unit 18.

If the measurement result exceeds the threshold, the control unit 18 determines that the terminal is sufficiently far away from the user's head, and there is no risk to harm the user's health even in an operation mode of the terminal where signal transmission is performed at high energy radiation. On the other hand, when the measurement result is below the threshold, the control unit 18 determines that the terminal is close to the user's head. Then, the control unit 18 checks whether the terminal is operated at a level of energy radiation that might lead to a violation of the SAR values. In case the terminal is operated at such a level of energy radiation (increased energy radiation), the control unit 18 can effect a warning signal to be output from a suitable warning member 20. In the embodiment shown, the warning member 20 is a speaker and the warning signal is given as an acoustic signal. The acoustic signal may be given only shortly (e.g. in form of a single short beep) so as not to disturb a phone conversation going on. Additionally or alternatively, the warning signal may be given in a tactile form or even in an optical form.

The situation of increased energy radiation can be a multi-slot signal transmission in a TDMA telecommunication system. Similarly, in telecommunication systems using FDMA (frequency division multiplex access) or CDMA (code division multiplex access) techniques, a possible situation of increased energy radiation can be a multifrequency signal transmission or a multi-code signal transmission where one frequency or code is used for voice conversation and another frequency or code is used for background data transfer, for example.

When the control unit 18 issues the warning signal, the user can change the position of the terminal and/or he may have the possibility to switch the terminal from the increased energy radiation mode to a reduced energy radiation mode in which the SAR values are not in danger to be violated and, for example, the background data transfer is stopped. Additionally or alternatively, the control unit 18 may be arranged to automatically stop the increased energy radiation mode and to switch into the reduced energy radiation mode. In this case it is not even necessary to issue the warning signal.

In a TDMA telecommunication system, the reduced energy radiation mode can be, for example, a one-slot transmission mode in which only one time-slot is used for signal transmission. Similarly, a reduced power level can be used as the reduced energy radiation mode in a CDMA or FDMA telecommunication system.

The amplifier 10 may be able to operate at different power levels. Then, depending on the power level of the amplifier 10 the power of the reflected signals will vary. The measurement result is therefore dependant on the amplifier's power level, too. To enable the head position of the user to be correctly detected at different power levels, the threshold is set dependant on the amplifier's power level (as indicated by a dashed line 22) and is higher at a higher power level of the amplifier 10 and lower at a lower power level.

The terminal may have an antenna connector 24 accessible from the outside for connecting an external antenna 26 to the terminal. The external antenna 26 may be, e.g., a car-mounted antenna. An antenna switch 28 enables to switch between the built-in antenna 12 and the external antenna 26. The antenna switch 28 may be controllable by the control unit 18. As indicated by a dashed line 30, the control unit 18 receives information on whether the external antenna 26 is inserted into the antenna connector 24 or not. When the external antenna 26 is connected to the terminal and the SAR values are in danger to be violated, the control unit 18 then may effect switching from the internal antenna 12 to the external antenna 26 so that all of the RF power is transmitted from the external antenna 26. This antenna switching may be performed in addition or alternatively to the issue of the above warning signal and can be used to avoid stopping any background data transfer, for example.

Furthermore, in case of a warning detailed information on the warning may be indicated on a LCD display (not shown) of the terminal. Such information can include the reason for the warning, an explanation of the background and what to do to resolve the problem, for example. The user may be able to clear the display by an acknowledgement, e.g. by pressing a particular button on the terminal.

## Claims

1. Mobile terminal for a wireless telecommunication system, comprising
- antenna means (12) built in said terminal,
- an output stage (10) for providing signals to said antenna means (12) to be transmitted therefrom,
- measuring means (16) for measuring impedance changes of said antenna means (12), and
- control means (18) responsive to said measuring means (16) for effecting a predetermined reaction when, as a first predetermined condition, a signal reflection as measured by said measuring means (16) is below a predetermined threshold and at the same time a second predetermined condition indicative of a dangerous level of an increased energy radiation from said antenna means (12) is met, for the purpose of a reduction of radiation of the antenna means (12), **characterized in that**, said predetermined threshold is set dependent on an output power level of said output stage so that the predetermined threshold is higher at a higher power level and lower at a lower power level of said output stage.

2. Terminal according to claim 1,
**characterized in,**
**that** the control means (18) effects said predeterminded reaction by adjusting the number of used transmit timeslots depending on a human tissue proximity in case that the terminal is operating in a TDMA mode, and/or by adjusting the output power level depending on a human tissue proximity in case that the terminal is operating in a CDMA or FDMA mode.

3. Terminal according to claim 2,
**characterized in,**
**that** the control means (18) is adapted to operate in the TDMA mode and/or the CDMA mode and/or the FDMA mode.

4. Terminal according to anyone of claims 1 to 3,
**characterized in,**
**that** said second predetermined condition requires a background data transfer from said terminal to be performed concurrently to a phone conversation over said terminal.

5. Terminal according to claim 4,
**characterized in,**
**that** said predetermined reaction comprises disabling or reducing the rate of said background data transfer.

6. Terminal according to anyone of claims 1 to 5,
wherein said telecommunication system is operable in a time division multiplex access mode providing a plurality of time-slots for signal communication,
**characterized in,**
**that** said second predetermined condition requires said terminal to be operated in a multi-slot transmission mode.

7. Terminal according to claim 6,
**characterized in,**
**that** said predetermined reaction comprises adjustment of the number of used transmit timeslots.

8. Terminal according to anyone of claims 1 to 7,
**characterized in,**
**that** said threshold is determined dependent on a multislot class at which said output stage (10) is operating.

9. Terminal according to anyone of claims 1 to 8,
**characterized by**
a means (14) connected between said output stage (10) and said antenna means (12) for providing information regarding the antenna impedance (16).

10. Terminal according to claim 9,
**characterized in,**
**that** the means (14) is a directional coupler.

11. Terminal according to claim 9,
**characterized in,**
**that** the means (14) is a bridge configuration.

## Patentansprüche

1. Mobiles Endgerät für ein drahtloses Telekommunikationssystem, das aufweist:
- eine in das Endgerät eingebaute Antennenanordnung (12),
- eine Ausgangsstufe (10) zur Lieferung von Signalen an die Antennenanordnung (12), die von dieser gesendet werden sollen,
- eine Meßeinrichtung (16) zum Messen von Änderungen der Impedanz der Antennenanordnung (12) und
- eine auf die Meßeinrichtung (16) ansprechende Steuereinrichtung (18) zum Herbeiführen einer vorbestimmten Reaktion zum Zwecke einer Strahlungsreduktion der Antennenanordnung (12), wenn als eine erste vorbestimmte Bedingung die von der Meßeinrichtung (16) gemessene Signalreflexion unter einem vorbestimmten Schwellwert liegt und gleichzeitig eine zweite vorbestimmte Bedingung erfüllt ist, die für einen gefährlichen Pegel einer erhöhten Energieabstrahlung von der Antennenanordnung (12) kennzeichnend ist,
**dadurch gekennzeichnet,**
**dass** der vorbestimmte Schwellwert in Abhängigkeit von dem Pegel der Ausgangsleistung der Ausgangsstufe so eingestellt ist, dass der vorbestimmte Schwellwert bei einem höheren Leistungspegel der Ausgangsstufe höher und bei einem niedrigeren Leistungspegel der Ausgangsstufe niedriger ist.

2. Endgerät nach Anspruch 1,
**dadurch gekennzeichnet,**
**dass** die Steuereinrichtung (18) die genannte vorbestimmte Reaktion durch Einstellen der Zahl der benutzten Sendezeitschlitze in Abhängigkeit von der Nähe von menschlichem Gewebe bewirkt, falls das Endgerät in einem TDMA-Modus arbeitet, oder durch Einstellen des Pegels der Ausgangsleistung in Abhängigkeit von der Nähe von menschlichem Gewebe, falls das Endgerät in einem CDMA- oder in einem FDMA-Modus arbeitet.

3. Endgerät nach Anspruch 2,
**dadurch gekennzeichnet,**
**dass** die Steuereinrichtung (18) für den Betrieb im TDMA-Modus und/oder im CDMA-Modus und/oder im FDMA-Modus ausgelegt ist.

4. Endgerät nach einem der Ansprüche 1 bis 3,
**dadurch gekennzeichnet,**
**dass** die zweite vorbestimmte Bedingung einen Hintergrund-Datentransfer von dem Endgerät erfordert, der gleichzeitig mit einer telephonischen Unterhaltung über das Endgerät ausgeführt werden soll.

5. Endgerät nach Anspruch 4,
**dadurch gekennzeichnet,**
**dass** die vorbestimmte Reaktion das Deaktivieren oder Reduzieren der Rate des Hintergrund-Datentransfers umfasst.

6. Endgerät nach einem der Ansprüche 1 bis 5,
bei dem das Telekommunikationssystem in einem Zeitmultiplex-Zugriffsmodus betreibbar ist, der mehrere Zeitschlitze für die Signalkommunikation zur Verfügung stellt,
**dadurch gekennzeichnet,**
**dass** die zweite vorbestimmte Bedingung erfordert, dass das Endgerät in einem Mehrfachschlitz-(Multislot)-Sendemodus zu betreiben ist.

7. Endgerät nach Anspruch 6,
**dadurch gekennzeichnet,**
**dass** die genannte vorbestimmte Reaktion das Einstellen der Zahl der benutzten Sendezeitschlitze umfasst.

8. Endgerät nach einem der Ansprüche 1 bis 7,
**dadurch gekennzeichnet,**
**dass** der genannte Schwellwert in Abhängigkeit von einer Multislot-Klasse festgelegt wird, in der die Ausgangsstufe (10) betrieben wird.

9. Endgerät nach einem der Ansprüche 1 bis 8,
**gekennzeichnet durch**
eine zwischen der Ausgangsstufe (10) und der Antennenanordnung (12) angeordnete Einrichtung (14) zur Lieferung einer die Antennenimpedanz (16) betreffenden Information.

10. Endgerät nach Anspruch 9,
**dadurch gekennzeichnet,**
**dass** die Einrichtung (14) ein Richtungskoppler ist.

11. Endgerät nach Anspruch 9,
**dadurch gekennzeichnet,**
**dass** die Einrichtung (14) eine Brückenanordnung ist.

## Revendications

1. Terminal mobile pour un système de télécommunication sans fil, comprenant
- des moyens formant antenne (12) intégrés audit terminal,
- un étage de sortie (10) pour fournir des signaux auxdits moyens formant antenne (12) devant être transmis depuis ceux-ci,
- des moyens de mesure (16) pour mesurer des changements d'impédance desdits moyens formant antenne (12), et
- des moyens de commande (18) sensibles auxdits moyens de mesure (16) pour effectuer une réaction prédéterminée lorsque, en tant que première condition prédéterminée, la réflexion d'un signal telle que mesurée par lesdits moyens de mesure (16) est au-dessous d'un seuil prédéterminé et en même temps une seconde condition prédéterminée indicative d'un niveau dangereux d'un rayonnement d'énergie accru depuis lesdits moyens formant antenne (12) est satisfaite, aux fins d'une réduction de rayonnement des moyens formant antenne (12), **caractérisé en ce que** ledit seuil prédéterminé est établi en fonction d'un niveau de puissance de sortie dudit étage de sortie de sorte que le seuil prédéterminé soit supérieur à un niveau de puissance supérieur et inférieur à un niveau de puissance inférieur dudit étage de sortie.

2. Terminal selon la revendication 1,
**caractérisé en ce que** les moyens de commande (18) effectuent ladite réaction prédéterminée an ajustant le nombre de tranches de temps de transmission utilisées en fonction de la proximité d'un tissu humain dans le cas où le terminal fonctionne en mode TDMA, et/ou en ajustant le niveau de puissance de sortie en fonction de la proximité d'un tissu humain dans le cas où le terminal fonctionne en mode CDMA ou FDMA.

3. Terminal selon la revendication 2,
**caractérisé en ce que** les moyens de commande (18) sont adaptés pour fonctionner en mode TDMA et/ou en mode CDMA et/ou en mode FDMA.

4. Terminal selon l'une quelconque des revendications 1 à 3,
**caractérisé en ce que** ladite seconde condition prédéterminée requiert qu'un transfert de données de fond depuis ledit terminal soit effectué simultanément avec une conversation téléphonique sur ledit terminal.

5. Terminal selon la revendication 4,
**caractérisé en ce que** ladite réaction prédéterminée comprend l'invalidation ou la réduction du taux dudit transfert de données de fond.

6. Terminal selon l'une quelconque des revendications 1 à 5,
dans lequel ledit système de télécommunication est exploitable dans un mode d'accès multiplex par répartition dans le temps fournissant une pluralité de tranches de temps pour la communication de signaux,
**caractérisé en ce que** ladite seconde condition prédéterminée requiert que ledit terminal soit exploité en mode de transmission à tranches de temps multiples.

7. Terminal selon la revendication 6,
**caractérisé en ce que** ladite réaction prédéterminée comprend l'ajustement du nombre de tranches de temps de transmission utilisées.

8. Terminal selon l'une quelconque des revendications 1 à 7,
**caractérisé en ce que** ledit seuil est déterminé en fonction d'une classe à tranches de temps multiples au niveau de laquelle ledit étage de sortie (10) fonctionne.

9. Terminal selon l'une quelconque des revendications 1 à 8,
**caractérisé par** un moyen (14) connecté entre ledit étage de sortie (10) et lesdits moyens formant antenne (12) pour fournir des informations concernant l'impédance d'antenne (16).

10. Terminal selon la revendication 9,
**caractérisé en ce que** le moyen (14) est un coupleur directionnel.

11. Terminal selon la revendication 9,
**caractérisé en ce que** le moyen (14) est une configuration de pont.
